**Europäisches Patentamt**

**European Patent Office**

**Office européen des brevets**

(19)

(11) Numéro de publication: **0 004 817**
**B1**

## FASCICULE DE BREVET EUROPEEN

(12)

(45) Date de publication du fascicule du brevet: **24.03.82**

(21) Numéro de dépôt: **79400212.1**

(22) Date de dépôt: **02.04.79**

(51) Int. Cl.³: **A 47 J 25/00, B 26 D 1/26, B 26 B 3/04**

(54) **Appareil permettant d'extraire la pulpe d'un fruit ou d'un légume de son écorce sans détruire celle-ci.**

(30) Priorité: **05.04.78 FR 7810990**
**21.02.79 FR 7904457**

(43) Date de publication de la demande:
**17.10.79 Bulletin 79/21**

(45) Mention de la délivrance du brevet:
**24.03.82 Bulletin 82/12**

(84) Etats contractants désignés:
**BE CH DE GB IT NL**

(56) Documents cités:
**BE - A - 650 742**
**CH - A - 196 928**
**DE - C - 604 657**
**FR - A - 2358839**

(73) Titulaire: **Coulon, Serge**
**46 Cours des Dames**
**F-17000 La Rochelle (FR)**

(73) Titulaire: **Amour, Louis**
**54 Rue Pasteur**
**F-44340 Bouguenais (FR)**

(72) Inventeur: **Coulon, Serge**
**46 Cours des Dames**
**F-17000 La Rochelle (FR)**
Inventeur: **Amour, Louis**
**54 Rue Pasteur**
**F-44340 Bouguenais (FR)**

(74) Mandataire: **Harlé, Robert et al,**
**c/o Cabinet Harlé & Phélip 21, rue de la**
**Rochefoucauld**
**F-75009 Paris (FR)**

Courier Press, Leamington Spa, England.

## Appareil permettant d'extraire la pulpe d'un fruit ou d'un légume de son écorce sans détruire celle-ci

La présente invention concerne un appareil permettant d'extraire la pulpe d'un fruit ou d'un légume de son écorce et plus particulièrement celle d'un ananas.

Jusqu'ici, pour effectuer l'extraction de la partie comestible des ananas en vue de leur consommation immédiate, on procède génrralement au fractionnement du fruit en tranches longitudinales de façon à déterminer des quartiers. Il est également connu de partager le fruit en tranches transversales après séparation de la pulpe et de l'écorce, et extraction de la partie centrale fibreuse, en vue de sa conservation. Toutes ces opérations s'effectuent d'une façon manuelle et présentent l'inconvénient d'être longues si l'on désire obtenir une parfaite élimination de toute trace d'écorce. On a proposé, dans la demande de brevet français 2.358.839, un appareil qui comporte deux lames en forme de cylindres concentriques. La lame coupante intérieure sépare la pulpe de la partie fibreuse centrale, et la lame coupante extérieure sépare la pulpe de l'écorce. Pour opérer, on fait traverser par les lames toute la masse de l'annas, y compris la partie de l'écorce qui est à l'opposé du côté d'entrée, et cette partie d'écorce doit être ensuite séparée par une opération manuelle. En outre, le restant de l'écorce forme une sorte de tube qui est inutilusable. D'autre part, les procédés connus ne permettent pas une conservation d'une partie du fruit dans son écorce après le prélèvement d'une partie seulement de sa pulpe.

On connaît aussi des appareils pour couper ou diviser des fruits, comme celui décrit au brevet BE—A650.742, qui comporte une série de lames verticales, disposées en étoile ou en lignes parallèles, et soutenus par un tube vertical central à bords coupants et éventuellement un support annulaire périphérique. Un tel appareil fonctionne essentiellement par déplacement vertical, et la pulpe n'est détachée qu'après qu'il qu'il a traversé entièrement le fruit, si bien que l'écorce est là aussi, inutilisable.

Dans un autre domaine, le brevet CH.A196.228 décrit un dispositif qui consiste en un arc en forme de U renversé comportant un fil tendu entre ses entrémités dont une au moins est taillée en pointe. Par enfoncement de cette extrémité pointue verticalement dans le fromage, le fil opère en coupe verticale, et par rotation de l'arc autour de l'axe vertical de la même extrémité, le fil opère en coupe horizontale. L'autre extrémité de l'arc se trouve à l'extérieur du fromage, si bien que la croute du fromage est, là encore, rendue inutilisablepour former un réceipient.

L'appareil selon l'invention permet d'extraire totalement ou partiellement la pulpe d'un fruit tel qu'un ananas, en la séparant à la fois de la partie centrale dure ou fibreuse et de l'écorce, tout en conservant cette écorce qui peut ensuite constituer un récipient. L'invention fournit un appareil permettant d'extraire la pulpe d'un fruit ou d'un légume de son écorce sans détruire celle-ci, et comprenant un axe de commande porté par une poignée et capable d'entraîer en rotation un tube à bord coupant, destiné à séparer la partie centrale d'avec la pulpe, des moyens coupants portés par la poignée et situés à une certaine distance du tube et destinés à séparer la pulpe de l'écorce, et au moins une lame coupante radiale portée par le tube et capable de couper la pulpe dans un plan perpendiculaire à l'axe du tube quand celui-ci tourne sur lui-même et aussi de couper la pulpe dans un plan contenant l'axe du tube et la dite lame pendant la pénétration dudit tube. De préférence, les moyens coupants pour séparer la pulpe de l'écorce sont constitués par une lame d'acier coupante verticale disposée pointe en bas parallèlement à l'axe de commande. L'extrémité inférieure de tube emporte-pièce est aiguisée de façon à découper circulairement la fibre centrale du fruit par pénétration verticale, la lame radiale équipant le tube traversant la pulpe selon un plan de coupe radial. Après pénétration à la profondeur corresondant au volume de pulpe à extraire, il suffit de faire subir au tube une rotation d'un tour complet pour que la lame radiale détermine un plan de coupe horizontal. Cette rotation est effectuée au moyen de la poignée équipant l'axe vertical de commande, lequel entraîne le tube, et celui-ci entraîne à son tour la lame radiale qui est immobilisée par rapport à elle. Au cours de cette rotation, les moyens coupants destinés à séparer la pulpe de l'écorce décrivent une révolution déterminant un plan de coupe cylindrique. Le retrait vertical de l'ensemble axe de commande et tube permet l'extraction de la pulpe, selon un volume cylindrique. Dans le cas où le tube emporte-pièce comporte une série de lames radiales réparties à intervalles réguliers sur sa hauteur, le volume cylindrique de pulpe ainsi extrait est fragmenté selon un nombre correspondant de tranches.

Suivant un autre mode de réalisation intéressant, la position de la lame radiale est réglable, ce qui permet de prélever des tranches de toute hauteur désirée, et par exemple la lame coupante radiale est montée sur un support capable de coulisser le long du tube, et des moyens sont prévus pour immobiliser ledit support à au moins une hauteur prédeterminée le long du tube pendant la rotation de celui-ci sur son axe.

Les dessins annexés illustrent, à titre d'exemples, deux modes de réalisation de l'appareil conforme à la présente invention. Dans ceux-ci:

Fig. 1 représente une vue en perspective cavalière de l'appareil;

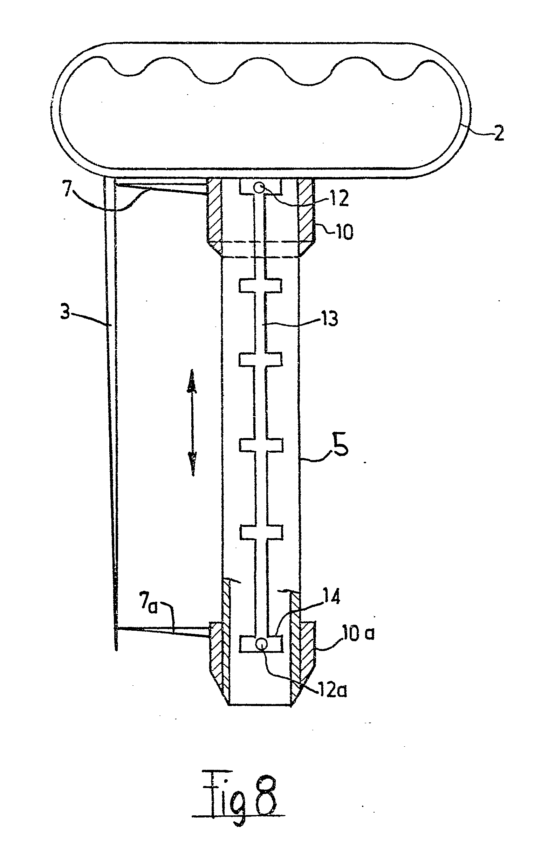

Fig. 2 représente une vue en élévation de l'axe vertical de commande,

Fig. 3 représente la douille emporte-pièce;

Fig. 4 représente la section droite des lames ou tiges coupantes équipant la douille emporte-pièce;

Fig. 5 représente l'extraction d'une partie de la pulpe d'un ananas,

Fig. 6 représente une variante de réalisation vue en élévation;

Fig. 7 représente une vue de détail de la lame équipant l'appareil selon la figure 6;

Fig. 8 représente une autre variante de réalisation vue en élévation.

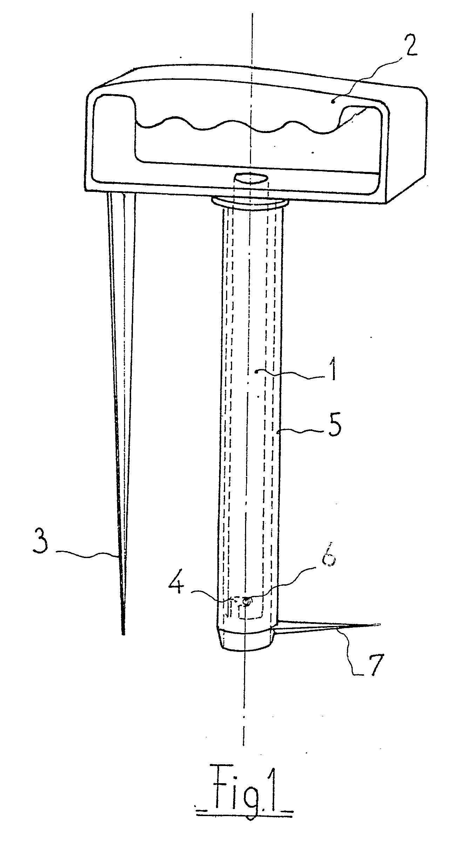

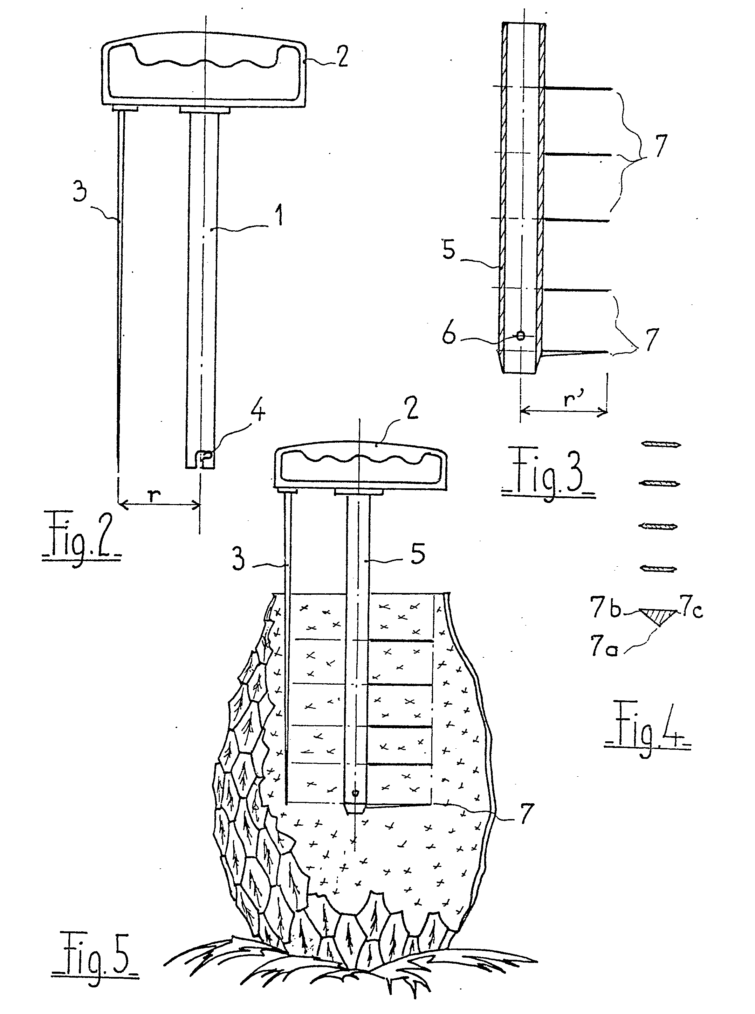

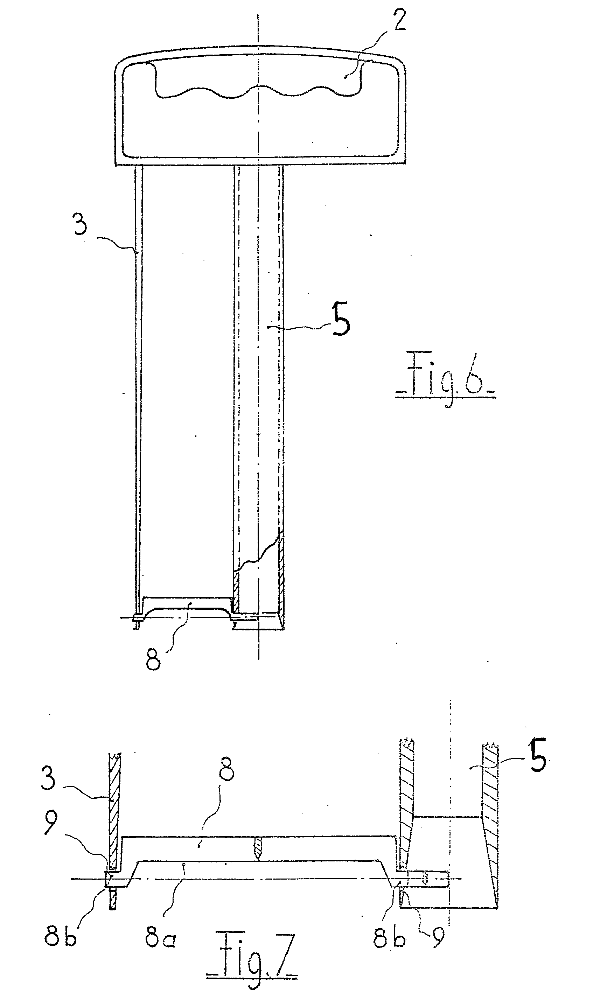

Tel qu'il est représenté en figure 1, l'appareil se compose d'un axe vertical central de commande 1 réalisé en tube creux, dont l'extrémité supérieure comporte une poignée 2 en-dessous de laquelle est implantée une lame d'acier coupante 3 disposée pointe en bas parallèlement à l'axe de commande. La longueur de cette lame correspond approximativement à la hauteur moyenne des ananas calibrés proposés à la vente; de même, la distance *r* séparant ladite lame de l'axe géométrique de l'appareil correspond approximativement au rayon extérieur de la partie comestible ou pulpe de l'ananas. L'extrémité inférieure de l'axe de commande comporte un dispositif d'accouplement 4 dit "a baïonnette", afin de réaliser un verrouillage dudit axe avec une douille cylindrique creuse 5 dans laquelle il s'ajuste, celle-ci, comportant à cet effet en partie inférieure un axe diamétral 6. Les bords de cette partie inférieure sont rendus coupants par affûtage afin de réaliser une sorte d'emporte-pièce permettant de découper circulairement la fibre centrale du fruit par pénétration verticale. La douille 5 comporte disposées radialement en sa partie inférieure ou réparties à intervalles réguliers sur une même génératrice et sur toute la hauteur, une ou plusieurs lames ou tiges coupantes 7 radiales selon que l'on veuille obtenir par extraction un seul morceau cylindrique de pulpe ou un empilage de tranches de pulpe. La saillie *r'* de la pointe de chacune de ces lames 7 correspond à l'éloignement *r* de la lame 3 de l'axe vertical géométrique de l'appareil.

La section droite de la lame 7 située le plus près possible de l'extrémité inférieure de la douille 5 est un triangle disposé pointe en bas, de façon à présenter une arête tranchante 7*a* permettant de sectionner la pulpe selon un plan vertical radial, au cours de la pénétration verticale de la douille 5, les deux autres arêtes 7*b* et 7*c* permettant de sectionner la pulpe selon un plan horizontal au cours de la rotation de la douille. Dans le cas où la douille est équipée de plusieurs lames 7, les autres lames ont une section droite mince disposée horizontalement dont les bords sont aiguisés, la largeur desdites lames étant au plau égale à la base de la section droite triangulaire de la lame 7 inférieure, ces lames servant uniquement au fractionnement de la pulpe selon des plans de coupe horizontaux et n'intervenant pas dans la coupe verticale de la pulpe.

L'appareil peut être assorti d'un jeu de deux douilles sont la saillie *r'* des lames serait différente afin de répondre à deux calibres différents de fruits. De même, il peu être prévu sur l'appareil des moyens permettant de régler cette saillie *r'* des lames 7 ainsi qui l'éloignement *r* de la lame 3 par rapport à l'axe géométrique de l'appareil.

L'extraction de la pulpe de fruit s'opère de la façon suivante: la douille emporte-pièce 5 est introduite par translation verticale dans la partie centrale de fruit à la profondeur désirée correspondant au volume de pulpe à extraire: cette translation cisaille la liaison de la fibre et de la pulpe. La lame ou tige coupante inférieure 7 traverse dans sa trajectoire la pulpe selon un plan de coupe vertical radial. L'axe de commande central 1 est alors introduit dans la douille 5, faisant pénétrer la lame 3 dans le fruit, soit uniquement par translation, soit à la fois par translation et par rotation selon la dureté du fruit pouvant s'opposer à la pénétration de la lame 3. En fin de translation verticale vers la base du fruit, l'axe diamétral 6 de la douille se verrouille dans le dispositif à baïonnette 4 de l'axe de commande. En effectuant alors une rotation complète de la poignée, on découpe la pulpe du fruit selon un plan de coupe cylindrique d'une part et selon un ou plusieurs plans de coupe horizontaux par la révolution respective de la lame 3 et de la ou des lames 7 d'autre part. La pulpe est ainsi découpée selon un volume cylindrique monobloc ou un empilage cylindrique de tranches de même épaisseur. Son extraction s'effectue par translation verticale de l'ensemble douille et axe de commande, la ou les lames ou tiges 7 assurant une retenue de la pulpe au cours de cette translation.

L'invention peut admettre un certain nombre de variantespar rapport à ce qui vient d'être décrit.

C'est ainsi qu'il peut être envisagé une inversion de la position relative de la douille et de l'axe de commande, ladite douille emporte-pièce se situant alors à l'intérieur de l'axe de commande. De même, l'appareil peut ne pas comporter de douille 5, le tube 1 jouant primitivement le rôle d'axe do commande se substituant alors à la dite douille pour faire office d'emporte-pièce et ayant à cet effet les bords de son extrémité inférieure affûtés. Le moyen permettant de découper la base du bloc de pulpe à extraire selon un plan horizontal consiste dans une lame basculante 8. Cette lame a une section droite amincie dont la face active est affûtée selon un simple ou double biseau, son arête tranchante 8*a* se trouvant décalée en arrière de l'axe des tourillons 8*b* constituant ses deux extrémités, lesquels tourillons s'engagent dans des trous 9 exécutés en face à face sur un axe horizontal, sur la lame 3 et sur le tube 1. L'arête 8*a* se raccorde sur les tourillons par deux parties incurvées également tranchantes. L'effort de pénétration exercé verticalement sur l'appareil provoque la mise en position de la lame 8 de façon telle que son arête tranchante puisse attaquer la pulpe selon un plan de coupe radial vertical tel que représenté en figure 6. Une fois parvenu à la profondeur désirée, l'effort de rotation exercé sur la poignée place la lame de façon à ce que son arête tranchante puisse opérer dans un plan horizontal. La lame 3 et le tube 1 peuvent comporter chacun une succession de trous 9 afin de permettre d'équiper l'appareil d'autant de lames 8 pour obtenir un découpage en tranches de la pulpe. Le tourillon de la lame 8 s'engageant dans le tube 1 peut être prolongé à l'intérieur de celui-ci et jusqu' á l'axe géométrique de l'appareil par une lame coupante destinée à sectionner la base de la partie fibreuse.

La figure 8 est relative à une autre variante particulièrement intéressante parce qu'elle permet de réduire les efforts nécessaires pour séparer la pulpe.

L'appareil comprend un axe de commande 1 réalisé en tube creux, et qui constitue donc également la douille 5, son bord inférieur étant affûté, une poignée 2, sous laquelle est implantée une lame coupante d'acier 3, disposée pointe en bas et parallèle au tube et destinée lorsqu'elle tourne, à séparer la pulpe de l'écorce, c'est-à-dire que ses tranchants sont dans un plan tangentiel par rapport au cylindre qu'elle décrit en tournant.

Une lame coupante radiale 7 est représentée sur la figure à la fois en position haute, près de la poignée, et en position basse, repère 7a. Cette lame comporte un tranchant dirigé vers le bas et au moins un autre tranchant dirigé dans un plan perpendiculaire à l'axe du tube. Sa longueur est telle qu'elle rejoint la lame 3. Elle est portée par un support 10,10a formé d'un tronçon tubulaire à bords chanfreinés vers le bas, et qui peut coulisser le long du tube 1. Ce support comporte un ergot intérieur 12,12a qui peut coulisser dans une rainure longitudinale 13 du tube.

Cette rainure comporte des encoches 14 à diverses hauteurs, une rotation du tube 1 sur lui-même, lorsque l'ergot 12,12a est au niveau d'une encoche, faisant pén écrer l'ergot dans l'encoche et empêche le déplacement du support et de la lame coupante le long du tube 1.

Le mode opératoire est suivant:

On commence par placer la lame 7 dans sa position la plus proche de la poignée, on enfonce l'appareil dans le fruit, puis on le fait tourner autour de l'axe du tube. On crée ainsi deux saignées cylindriques, qui séparent la pulpe de la partie centrale d'une part et de l'écorce d'autre part. On retire ensuite l'outil, puis on place l'ergot 12 dans une des encoches 14 situées plus loin de la poignée. On enfonce alors à nouveau l'outil dans le fruit, le tube 1 et la lame coupante 3 revenant dans les saignées qu'ils ont creusées. La lame 7 fait une saignée radiale puis, lorsqu'on est arrivé à l'enfoncement désiré, on fait tourner l'appareil autour de l'axe du tube, si bien que la lame 7 forme une saignée perpendiculaire à l'axe. On découpe ainsi un volume cylindrique de la hauteur désirée, qui est totalement détaché du fruit et s'extrait sans difficulté.

Sans sortir du cadre de l'invention, les composants de l'appareil ci-dessus décrit, tels que la douille emporte-pièce 5 et la lame 3, peuvent être conçus comme accessoires s'adaptant à certains appareils déjà existants tels que les robots ménagers par exemple.

Entre autres avantages, l'appareil permet d'éviter la destruction de l'écorce, laquelle peut, après extraction de la pulpe, faire office de présentoir contenant par exemple une préparation dans la composition de laquelle peut entrer la pulpe, telle qu'une salade de fruits par exemple.

L'appareil, objet de l'invention, peut être utilisé pour l'extraction de la pulpe de fruits ou de légumes comportant une écorce.

**Reventications**

1. Appareil permettant d'extraire la pulpe d'un fruit ou d'un légume de son écorce sans détruire celle-ci, et comprenant un axe de commande (10) porté par une poignée (2) et capable d'entraîner en rotation un tube à bond coupant (5), destiné à séparer la partie centrale d'avec la pulpe, des moyens coupants (3) portés par la poignée et situés à une certaine distance du tube et destinés à séparer la pulpe de l'écorce, caractérisé en ce qu'il comprend au moins une lame coupante radiale (7,8) portée par le tube et capable de couper la pulpe dans un plan perpendiculaire à l'axe du tube quand celui-ci tourne sur lui-même, et aussi de couper la pulpe dans un plan contenant l'axe du tube et ladite lame pendant la pénétration dudit tube.

2. Appareil selon la revendication 1, caractérisé en ce qu'il est prévu une lame radiale (7), ayant une section triangulaire pointe en bas avec des arêtes tranchantes (7a,7b,7c), qui permettent de sectionner la pulpe dans un plan vertical au cours de la pénétration de tube parallèlement à l'axe et dans un plan horizontal au cours de la rotation du tube.

3. Appareil selon la revendication 2, caractérisé en ce qu'il est prévu plusieurs lames radiales (7) à intervalles réguliers, situées dans le même plan vertical, la lame située la plus loin de la poignée ayant une section en triangle alors que les autres ont seulement des tranchants pour sectionner la pulpe dans un plan horizontal.

4. Appareil selon la revendication 1, caractérisé en ce que la lame coupante radiale (8) est montée basculante en appui à la fois sur le tube (5) et sur les moyens coupants (3) destinés à séparer la pulpe de l'écorce, et présente toujours son tranchant (8a) vers l'avant dans le sens où elle se dé-place dans la pulpe.

5. Appareil selon l'une des revendications 1 à 4, caractérisé en ce que la lame coupante radiale est montée sur un support (10) capable de coulisser le long du tube, et des moyens (12, 14) sont prévus pour immobiliser ledit support à au moints une hauteur prédéterminée le long du tube pendant la rotation de celui-ci sur son axe.

6. Appareil selon la revendication 5, caractérisé en ce que le support de lame coupante radiale comporte un ergot (12) qui pénètre dans une rainure longitudinale (13) du tube, laquelle rainure comporte au moins une encoche (14) qui permet l'immobilisation du support à une hauteur prédéterminée.

7. Appareil selon l'une des revendications 1 à 6, caractérisé en ce que les moyens pour séparer la pulpe de l'écorce sont constitués par une lame coupante (3) ayant une pointe en bas.

## Claims

1. Apparatus permitting the extraction of the pulp of a fruit or vegetable from its peel without destroying the latter, and comprising an operating shank (1) carried by a handle (2) and capable of rotatingly driving a tube (5) with a cutting edge, adapted to separate the central part from the pulp, cutting means (3) carried by the handle and located at a certain distance from the tube and adapted to separate the pulp from the peel, characterized in that it comprises at least a radial cutting blade (7,8) carried by the tube and capable of cutting the pulp in a plane perpendicular to the axis of the tube when the latter turns about itself, and also cutting the pulp in a plane containing the axis of the tube and the said blade during the penetration of the said tube.

2. Apparatus according to claim 1, characterized in that a radial blade (7) is provided having a triangular section, point below, with cutting edges (7a, 7b, 7c) which permit the sectioning of the pulp in a vertical plane in the course of the penetration of the tube parallel to the axis and in a horizontal plane during rotation of the tube.

3. Apparatus according to claim 2, characterized in that a plurality of radial blades (7) are provided at regular intervals, situated in the same vertical plane, the blade situated farthest from the handle having a triangular section while the others have only cutting edges for sectioning the plup in a horizontal plane.

4. Apparatus according to claim 1, characterized in that the radial cutting blade (8) is swingingly mounted, bearing both against the tube (5) and the cutting means (3) adapted to separate the pulp from the peel, and always has its cutting edge (8a) facing forwards in the direction in which it is displaced in the pulp.

5. Apparatus according to one of claims 1 to 4, characterized in that the radial cutting blade is mounted on a support (10) capable of sliding along the tube, and means (12,14), are provided for immobilizing the said support at least at one predetermined height along the tube during the rotation of that latter about its axis.

6. Apparatus according to claim 5, characterized in that the radial cutting blade support comprises a lug (12) which penetrates into a longitudinal groove (13) of the tube, which groove comprise at least one notch (14) which permits the immobilization of the support at a predetermined height.

7. Apparatus according to one of claims 1 to 6, characterized in that the means for separating the pulp from the peel are constituted by a cutting blade (3) having a point below.

## Patentansprüche

1. Vorrichtung zum Herausnehmen des Fruchtfleisches einer Frucht oder eines Gemüses aus seiner Schale, ohne diese zu zerstören, bestehend aus einer Betätigungsachse (1), die von einem Handgriff (2) gehalten ist und von diesem in Drehung versetzt werden kann, aus einem Rohr mit einem schneidenden Rand (5) zum Abtrennen des zentralen Teils vom Fruchtfleisch und aus Schneidmitteln (3), die vom Handgriff gehalten und in einem gewissen Abstand vom Rohr angeordnet sind und zum Trennen des Fruchtfleisches von der Schale dienen, dadurch gekennzeichnet, daß mindestens eine radiale Schneidklinge (7, 8) vorgesehen ist, die von dem Rohr getragen ist und befähigt ist, das Fruchtfleisch in einer zur Rohrachse senkrechten Ebene zu schneiden, sobald das Rohr gedreht wird und auch das Fruchtfleisch in einer Ebene durch die Rohrachse und die genannte Klinge während des Eindringens des Rohres zu schneiden.

2. Vorrichtung nach Anspruch 1, gekennzeichnet durch eine radiale Schneidklinge (7) von dreieckigem Querschnitt mit nach unten gerichteter Spitze mit den Schneidkanten (7a, 7c), so daß sie das Fruchtfleisch beim Eindringen parallel zur Rohrachse in einer vertikalen Ebene und bei der Drehung des Rohres in einer horizontalen Ebene schneidet.

3. Vorrichtung nach Anspruch 2, dadurch gekennzeichnet, daß mehrere radiale Schneidklingen (7) in gleichmäßigen Abständen in der gleichen vertikalen Ebene angeordnet sind, wobei die am weitesten vom Handgriff entfernte Schneidklinge einen Dreiecksquerschnitt aufweist, während die Schneiden der anderen Klingen so ausgebildet sind, daß sie das Fruchtfleisch lediglich in einer horizontalen Ebene schneiden.

4. Vorrichtung nach Anspruch 1, dadurch gekennzeichnet, daß die radiale Schneidklinge (8) schwenkbar mit Lagerstellen an dem Rohr (5) und an dem zur Trennung des Fruchtfleisches von der Schale dienenden Schneidmittel (3) gelagert ist, so daß die Schneidkante (8a) stets in die Richtung weist, in der die Schneidklinge (8) bewegt wird.

5. Vorrichtung nach einem der Ansprüche 1 bis 4, dadurch gekennzeichnet, daß die radiale Schneidklinge auf einem Träger (10) montiert ist, der längs des Rohres verschiebbar ist und daß Mittel (12, 14) vorgesehen sind, mit denen dieser Träger in mindestens einer vorbestimmten Höhe auf der Länge des Rohres während dessen Drehung un seine Achse unbeweglich festgehalten werden kann.

6. Vorrichtung nach Anspruch 5, dadurch gekennzeichnet, daß der Träger (10) der radialen Schneidklinge einen Nocken (12) aufweist, der in eine Längsnut (13) des Rohres eingreift und diese Längsnut mindestens eine Rastkerbe (14) zum Festhalten des Trägers in der vorbestimmten Höhe aufweist.

7. Vorrichtung nach einem der Ansprüche 1 bit 6, dadurch gekennzeichnet, daß die Mittel zur Trennung des Fruchtfleisches von der Schale aus einer Schneidklinge (3), die unten eine Spitze hat, bestehen.

Fig.1

Fig.2

Fig.3

Fig.4

Fig.5

_Fig.6_

_Fig.7_

Fig 8